# EUROPEAN PATENT SPECIFICATION

(11) **EP 1 576 837 B1**
(45) Date of publication and mention of the grant of the patent: **06.11.2019**
(21) Application number: 02795725.7
(22) Date of filing: 05.12.2002
(51) Int. Cl.: H04L 12/16, G06F 15/16, G08C 25/02, H04L 1/16, H04L 1/18

(54) **APPARATUS AND METHOD FOR USE IN EFFECTING AUTOMATIC REPEAT REQUESTS IN WIRELESS MULTIPLE ACCESS COMMUNICATIONS SYSTEMS**
VORRICHTUNG UND VERFAHREN ZUR AUSFÜHRUNG AUTOMATISCHER WIEDERHOLUNGSANFRAGEN IN DRAHTLOSEN KOMMUNIKATIONSSYSTEMEN MIT MEHRFACHZUGRIFF
APPAREIL ET PROCEDE A UTILISER DANS LA REALISATION DE REQUETES REPETEES AUTOMATIQUES DANS DES SYSTEMES DE COMMUNICATION HERTZIEN A ACCES MULTIPLES

(43) Date of publication of application: 21.09.2005
(60) Divisional application: 13020061.1
(73) Proprietor: Qualcomm Incorporated, San Diego, CA 92121 (US)
(72) Inventor: LAROIA, Rajiv, Basking Ridge, NJ 07920 (US); LI, Junyi, Bedminster, NJ 07921 (US); UPPALA, Sathyadev, Venkata, Scotch Plains, NJ 07076 (US)
(74) Representative: Wagner & Geyer
(86) International application number: PCT/US2002/038626
(87) International publication number: WO 2004/054285

(56) References cited:
- EP-A1- 1 168 877
- GB-A- 2 287 383
- US-A- 6 157 628
- US-B1- 6 335 933
- US-B1- 6 473 399
- US-B1- 6 496 520
- US-B1- 6 504 836
- US-B1- 6 505 034
- FAIRHURST G.: 'Advice to link designers on link automatic repeat reQuest (ARQ)' NETWORK WORKING GROUP, RFC 3366 August 2002, pages 1 - 27, XP002962745
- STALLINGS WILLIAM AND VAN SLYKE RICHARD: 'Business Data Communications: Third Edition', 1998, PRENTICE HALL pages 125 - 135, XP002962746

## Description

### Technical Field

This invention relates to wireless communications systems and, more particularly, to wireless communications between wireless terminals and base stations in a multiple access communications system.

### Background of the Invention

Typically, the wireless channel used in a wireless communications system is not as reliable as a wireline channel, because of such channel impairments as multipath fading and Doppler spread. One general technique of improving the wireless channel reliability is to use automatic repeat requests (ARQs). That is, if a received traffic data is detected as having errors, the transmitter will be instructed to retransmit the same traffic data again. When the wireless channel condition and/or interference condition is not completely correlated, retransmission increases the probability of successful traffic reception. One such wireless communications system is the Orthogonal Frequency Division Multiplexing (OFDM) based Spread Spectrum Multiple Access system.

In prior known wireless systems, ARQ is based on exchanging control messages. Specifically, when the receiver detects an error in the received traffic data, it transmits back a control message that includes a request for retransmission of the erroneous traffic data in a control channel dedicated between the transmitter and the receiver. In general, the retransmission request contains the identifier of an corrupted or missed traffic data, such as its sequence number.

Additionally, because the dedicated control channel is also used to convey other control messages, the retransmission request message may have to be inserted into a generic control message format, which may include a greater number of bits than is required by the retransmission request message. Moreover, a specific control message header is typically included for the retransmission request message. Hence, the control message based transmission technique of retransmission requests may take a long time to transmit and cause large overhead, which is very undesirable. As a result, it is generally considered that real-time traffic cannot benefit much from ARQ as the transmission of the retransmission request is not fast enough to meet system deadline requirement.

Attention is drawn to US 6 157 628 A which describes that in CDMA mobile communication of the packet switching mode which is one-way, the packet is transmitted to divide to a frame unit. In this time, the first, the second and the third transmission timing which are obtained to divide to three pieces the predetermined frame are set up for increasing the transmission efficiency by realizing the retransmission of the frame unit, as the transmission timing of a backward control signal in a backward channel. A base station transmits a forward signal (a forward control signal and an user data signal) by using code A (a forward channel) at any frame. When the forward signal is received at this frame by mobile station, mobile station transmits a receiving acknowledgment signal (a backward control signal) of the forward signal by using code A' at the first transmission timing of the next frame. Conversely, when the forward signal is not received correctly, mobile station transmits a retransmission request signal (the backward control signal) of the forward signal by using code A' at the first transmission timing of the next frame. The similar operation is carried out in a second and third mobile station. However, in this case, the transmission timing of the backward channel is the second or the third timing.

Further attention is drawn to GB 2 287 383 A describing a data message being transmitted to a plurality of communication units. The data message is received by the plurality of communication units, which determine whether the quality or anticipated quality of the received data message is acceptable. When at least one of the plurality of communication units determines that the received data message is of unacceptable quality or anticipated quality, the at least one of the plurality of communication units transmits an energy burst in a predetermined time window. Upon detection of the energy burst, the transmitting device may retransmit the data message to the plurality of communication units, or may establish a communication link of a selected quality or offer a communication of a different quality.

### Summary of the Invention:

In accordance with the present invention a method, and an apparatus, as set forth in the independent claims, respectively, are provided. Preferred embodiments of the invention are described in the dependent claims.

These and other problems and limitations of prior known wireless communications system traffic data retransmission arrangements are overcome by managing the channel resource by utilizing traffic segments and acknowledgment segments. This is realized by partitioning the channel resource into an acknowledgment channel and a traffic channel in a fixed manner. The acknowledgment channel includes acknowledgment segments and the traffic channel includes traffic segments. Individual acknowledgement and traffic segments may be associated with individual wireless terminals. Thus, one or more individual segments may be dedicated for use by a specific wireless terminal. The acknowledgment channel, like the traffic channel, may include segments dedicated for use by different wireless terminals. Thus, while individual channel segments may be dedicated to individual wireless terminals, since each channel includes segments corresponding to multiple devices, the acknowledgement and traffic channels may be viewed as channels which are common or shared by multiple wireless terminals. However, given that the channel segments are dedicated to individual wireless terminals, collisions of communications corresponding to different wireless terminals are avoided. A traffic segment is the basic resource unit to transport traffic data and has a prescribed finite time interval and bandwidth.

In one exemplary embodiment, each traffic segment in a downlink or an uplink is associated with an acknowledgment channel segment in a one-to-one manner. In such an embodiment, for each traffic segment there is a corresponding acknowledgement segment. Thus, there is a fixed relationship between each traffic segment and an acknowledgement segment which is known apriori to the various communications system components. Each individual acknowledgment segment is used to convey the acknowledgment information for the corresponding traffic segment. When traffic segments are used by, e.g., dedicated to, different users, the associated acknowledgment segments corresponding to the traffic segments are likewise also dedicated to the same set of different users. In such a case each traffic segment and corresponding acknowledgement segment corresponds to the same individual user. When the traffic segments are used by different users, the corresponding acknowledgment segments are also used by different users.

The base station uses the acknowledgment segments in the downlink to acknowledge the associated traffic segments received in the uplink. A wireless terminal that receives a downlink traffic segment uses the associated acknowledgment segment in the uplink to acknowledge the traffic segment. In various embodiments, each acknowledgement segment includes one bit which indicates either: 1) the successful communication of the data in the corresponding traffic segment or 2) the failure to successfully communicate the data in the traffic segment. In some embodiments, the acknowledgement segment is a single bit segment.

The base station monitors the acknowledgment segments associated with the traffic segments that the base station has transmitted to determine whether any of the traffic segments needs to be retransmitted. When a wireless terminal has transmitted a traffic segment in the uplink, it monitors the associated acknowledgment segment in the downlink to determine whether the traffic segment needs to be retransmitted.

Advantageously, given the fixed association between traffic and acknowledgement segments, the acknowledgment segment does not need to specify the resource parameters of the traffic segment, i.e., the slot and waveform set indices, or the identifier of the missed traffic data, such as sequence number. Instead, the information to be contained in an acknowledgment segment can be limited to just one-bit of information indicating whether the associated traffic has been successfully received. However, to facilitate other physical layer functions such as for the transmitter to measure the channel quality, an acknowledgment segment may also include some information of decoding results for the associated traffic segment, such as a measure of the raw error rate.

### Brief Description of the Drawing

FIG. 1 shows, in simplified block diagram form, a wireless multiple access communications system in which the invention may be advantageously employed;
FIG. 2 is a graphical representation illustrating an acknowledgment segment and a number of traffic segments useful in describing the invention;
FIG. 3 is a graphical representation illustrating a prescribed relationship between acknowledgment segments and traffic segments also useful in describing the invention;
FIG. 4A is a graphical representation illustrating the logical flow of acknowledging traffic segments transmitted in the downlink by the base station also useful in describing the invention;
FIG. 4B is a graphical representation illustrating the logical flow of acknowledging traffic segments received in the uplink by the base station also useful in describing the invention;
FIG. 5 is a flowchart illustrating steps in a transmitter process for determining whether to retransmit the traffic data in accordance with the invention; and
FIG. 6 is a flowchart illustrating steps in a receiver process for determining whether or not to transmit a retransmission request in accordance with the invention.

### Detailed Description

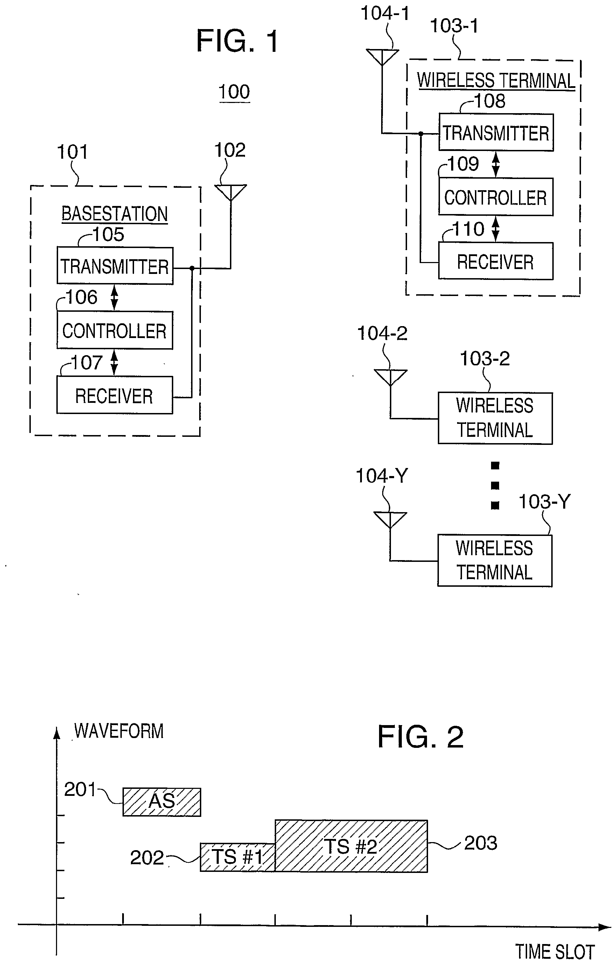

FIG. 1 shows, in simplified block diagram form, a wireless mobile multiple access communications system in which the invention may be advantageously employed. It should be noted that although applicants' unique invention will be described in the context of a wireless mobile communications system, it has equal application to non-mobile systems. As indicated above, one such mobile wireless communications system is OFDM based spread spectrum multiple access.

More specifically, traffic data is transported via the traffic channel and the traffic channel is allocated dynamically among the wireless terminals. Transported traffic data are to be acknowledged by the receiver rapidly in the invention by transmitting an acknowledgment in a segment of a common acknowledgement channel. The acknowledgement channel can be shared by multiple wireless terminals and thus users. This is realized by managing the channel, i.e., bandwidth and time interval, in the form of segments and by acknowledging traffic segments with acknowledgment segments by associating a traffic segment to a particular acknowledgment segment in a fixed, e.g., one-to-one, manner. In various embodiments this results in a direct one to one relationship between a traffic segment and an acknowledgement segment.

Specifically, shown in FIG. 1 is a mobile multiple access wireless communications system 100. System 100 includes base station 101 including antenna 102 and one or more remote wireless terminals, e.g., mobile units, 103-1, 103-2 through 103-Y including associated antennas 104-1, 104-2 and 104-Y, respectively. Transmission of signals is from and to base station 101 to and from remote wireless terminals 103. Wireless terminals 103 share the transmission spectrum in a dynamic fashion. The base station 101 uses the acknowledgment segments in the downlink to acknowledge the associated traffic segments received in the uplink. A wireless terminal 103 that receives a downlink traffic segment uses the associated acknowledgment segment in the uplink to acknowledge the traffic segment. The acknowledgement segment corresponding to a particular downlink traffic segment is used, in some embodiments, only by the wireless terminal to which the particular downlink traffic segment was directed. Over time, as downlink traffic segments are transmitted to different wireless terminals, the different wireless terminals will each use an acknowledgement segment. The base station 101 monitors the acknowledgment segments associated with the traffic segments that the base station 101 has transmitted to determine whether any of the traffic segments needs to be retransmitted. When a wireless terminal 103 has transmitted a traffic segment in the uplink, it monitors the associated acknowledgment segment in the downlink to determine whether the traffic segment needs to be retransmitted.

In this example, base station 101 includes transmitter 105, receiver 107 and controller 106 for transmitting and receiving wireless messages via antenna 102. Controller 106 is employed to control operation of transmitter 105 and receiver 107, in accordance with the invention. Similarly, in this example, each of wireless terminals 103-1 through 103-Y includes transmitter 108, receiver 110 and controller 109 for transmitting and receiving wireless messages via antenna 104. Controller 109 is employed to control operation of transmitter 108 and receiver 110, in accordance with the invention.

FIG. 2 illustrates the physical mechanism of managing the channel resource in the form traffic segments 202 and 203 and an acknowledgment segment 201. The wireless channel resource (bandwidth and time interval) is partitioned into an acknowledgment channel including the acknowledgment segments 201, etc., and a traffic channel including the traffic segments 202, 203, etc. Also shown are time slots. A time slot is a basic time unit and associated with it is a unique time slot index. During any particular time slot there could be a number of waveforms present that are used as the traffic channel. The waveforms may or may not be orthogonal to each other. One or more waveforms are grouped together as a waveform set. Each waveform set has a unique waveform set index. A traffic segment is defined as a combination of prescribed time slot and waveform set indices. In general, a traffic segment contains prescribed waveforms over a prescribed finite time interval.

In a given system, different traffic segments may contain time slots having time intervals of different duration and having waveform sets with different bandwidths. For example, as shown in FIG. 2, traffic segment #1 202 contains one time slot and two waveforms, while segment #2 203 contains two time slots and four waveforms.

All the traffic data between the base station 101 and the wireless terminals 103 is conveyed on traffic segments. A traffic segment is the basic unit of the traffic channel resource. In a wireless system, there are downlink traffic segments and uplink traffic segments. The traffic channel resource is allocated in a form of traffic segment allocation. That is, the base station 101 assigns traffic segments to the wireless terminals 103 in the cell such that the assigned wireless terminals 103 receive traffic in the assigned downlink traffic segments or transmit traffic in the assigned uplink traffic segments.

Acknowledgment information is also conveyed in a form of segments, called acknowledgment segments. Acknowledgment segments are separate from traffic segments. In a wireless system, there are downlink and uplink acknowledgment segments. Downlink acknowledgment segments are transmitted by the base station, and may thus be coded together. However, uplink acknowledgment segments are generally transmitted by different mobiles, and thus cannot be coded together.

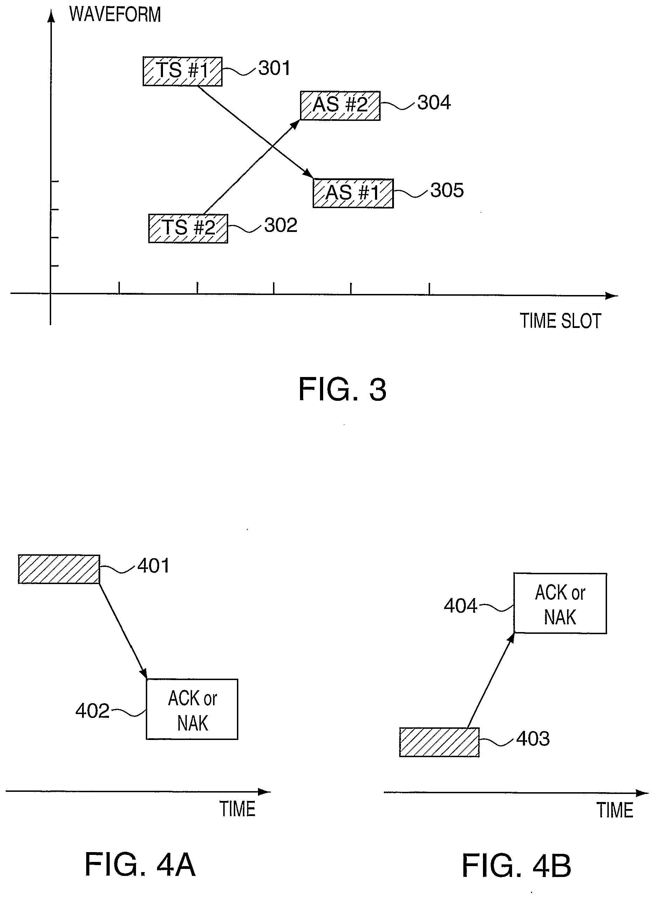

FIG. 3 is a graphical representation illustrating a prescribed relationship between acknowledgment segments and traffic segments also useful in describing the invention. Thus, as shown, the downlink wireless channel resource (bandwidth and time interval) is partitioned into an acknowledgment channel 304 and a traffic channel 301, among other channels. Similarly, the uplink wireless channel resource (bandwidth and time interval) is partitioned into an acknowledgment channel 305 and a traffic channel 302, among other channels. The partitioning of the traffic channel and the acknowledgment channel in both downlink and uplink is fixed, and the construction of traffic segments and acknowledgment segments is also determined a priori. Each traffic segment in the downlink or uplink is associated with an acknowledgment segment in the uplink or downlink, respectively, in a prescribed one-to-one manner. For example, as shown in FIG. 3 downlink traffic segment #1 301 is associated with uplink acknowledgment segment #1 305, and uplink traffic segment #2 302 is associated with downlink acknowledgment segment #2 304.

An acknowledgment segment, e.g., 304 or 305, is used to convey the acknowledgment information of the associated traffic segment, e.g., 302 or 301, respectively. Therefore, an acknowledgment segment cannot precede the associated traffic segment. The delay from the traffic segment to the associated acknowledgment segment reflects the time the receiver, e.g., 107 or 110, takes to decode the traffic segment and that an associated transmitter, e.g., 105 or 108, takes to prepare to transmit the acknowledgment. In a preferred embodiment, the delay should be selected to the minimum value that can be allowed by the processing capability of base stations and wireless terminals that are supported in a particular system.

The fact that the association of a traffic segment, e.g., 301 or 302, and an acknowledgment segment, e.g., 305 or 304, respectively, is determined in a prescribed manner allows that the acknowledgment segment does not necessarily include the resource parameters of the associated traffic segment, i.e., the time slot and waveform set indices, or the identifier of the missed traffic data, such as sequence number. In turn, this significantly reduces the overhead in transmitting acknowledgment segments. The essential information to be contained in an acknowledgment segment is just one-bit of information indicating whether the associated traffic data has been successfully received. Additionally, to facilitate other physical layer functions, such as the transmitter measuring the channel quality, an acknowledgment segment may also include some information regarding decoding results for the associated traffic segment, such as the estimate of raw error rate. By allocating an appropriate amount of channel resource, e.g., bandwidth and/or time interval, and/or transmission power, to acknowledgment segments, reliability of the ARQ can be ensured.

FIG. 4A is a graphical representation illustrating the logical flow of acknowledging traffic segments transmitted in the downlink by the base station 101. For each transmitted downlink traffic segment 401, the base station 101 receives the associated acknowledgment segment 402 in the uplink to determine whether the traffic segment needs to be retransmitted. Similarly, a wireless terminal 103 that receives a downlink traffic segment transmits the associated acknowledgment segment in the uplink to acknowledge the traffic segment.

FIG. 4B is a graphical representation illustrating the logical flow of acknowledging traffic segments received in the uplink by the base station 101. For each received uplink traffic segment 403, the base station 101 transmits the associated acknowledgment segment 404 in the downlink to acknowledge the uplink traffic segment 403. When a wireless terminal 103 has transmitted a traffic segment in the uplink, it monitors the associated acknowledgment segment in the downlink to determine whether the traffic segment needs to be retransmitted.

In this example, a positive acknowledgment (ACK) indicates that the associated traffic segment does not have to be retransmitted, while a negative acknowledgment (NAK) indicates that the associated traffic segment needs to be retransmitted. More specifically, the one-bit of information includes a first logical state and a second logical state. In this example, the first logical state is a logical 1 indicating the positive acknowledgment and the second logical state is a logical 0 indicating the negative acknowledgment.

The segment based ARQ scheme in accordance with the invention is fundamentally different from the existing form of the message based ARQ scheme in that acknowledgment information can be feed back very rapidly, thereby facilitating fast ARQ. Note that the delay between a traffic segment to the associated acknowledgment segment is mainly limited by the processing capability of the receiver, which is significantly less than the delay in the message based ARQ scheme. Additionally, as the acknowledgment segments only transport essentially one-bit of information, the acknowledgment overhead is very small. Unlike the existing ARQ technique where the acknowledgment message is transported in a control channel resource dedicated to a wireless terminal, according to the invention, the acknowledgment segments are shared by many wireless terminals 103 in the sense that when traffic segments are used by different users, the associated acknowledgment segments are also used by different users. Note that sharing the acknowledgment channel in accordance with an aspect of the invention does not cause any problem of collision.

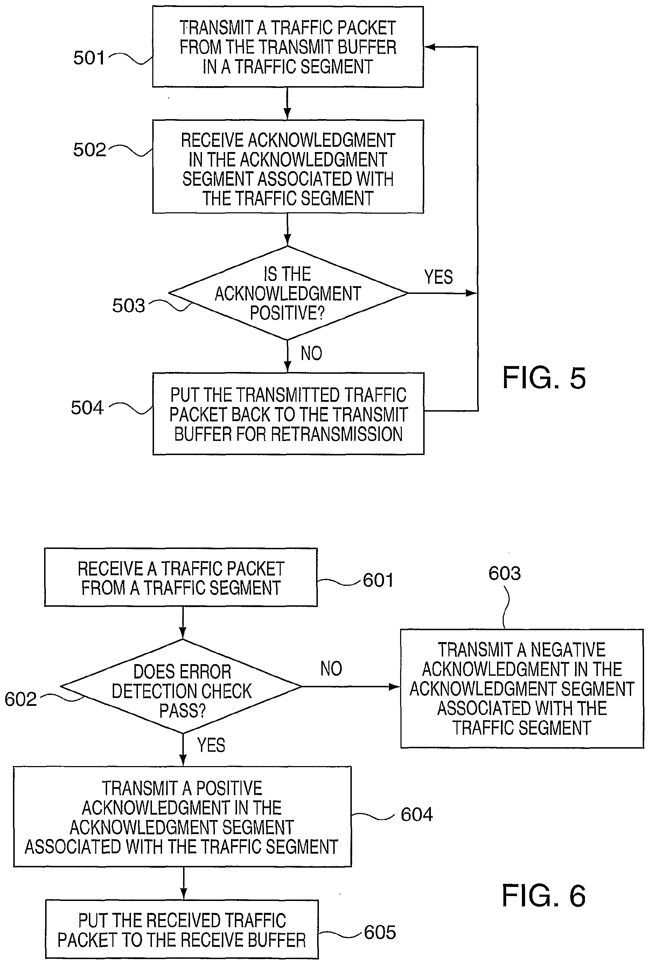

FIG. 5 is a flowchart illustrating steps in a transmitter process for determining whether to retransmit the traffic data in accordance with the invention. The transmitter process is started in step 501 which causes a traffic packet of data to be transmitted from a transmit buffer in a traffic segment. Therefore, for downlink traffic, the transmitter is the base station 105, and for uplink traffic, the transmitter is a wireless terminal 108. Then, in step 502 an acknowledgment is received in the acknowledgment segment associated with the transmitted traffic segment. Step 503 tests to determine if the received acknowledgment is a positive acknowledgment. Again, if the received acknowledgment is positive the traffic segment does not have to be retransmitted. Therefore, if the test result in step 503 is YES, a positive acknowledgment has been received and control is returned to step 501. Steps 501 through 503 are iterated until step 503 yields a NO result indicating that a negative acknowledgment has been received and retransmission of the associated traffic segment is required. Then, step 504 causes the transmitted traffic packet to be placed back into the transmit buffer for retransmission, and control is transferred to step 501. Thereafter, appropriate ones of steps 501 through 504 are iterated.

FIG. 6 is a flowchart illustrating steps in a receiver process for determining whether or not to transmit a retransmission request in accordance with the invention. The receive process is started in step 601, in which a traffic packet is received from a traffic segment. Therefore, for downlink traffic, the receiver is a wireless terminal 110, and for uplink traffic, the transmitter is the base station 107. Then, step 602 tests to determine if an error detection check of the data packet has been passed. If the test result in step 602 is NO, control is transferred to step 603. In turn, step 603 causes the transmission of a negative acknowledgment in the acknowledgment segment associated with the traffic segment that transported the traffic packet that failed the error detection check in step 602. If the test result in step 602 is YES, the error detection check of the traffic packet data has passed. Then, step 604 causes a positive acknowledgment to be transmitted in the acknowledgment segment associated with the traffic segment. Thereafter, step 605 causes the received traffic packet data to be placed in a receive buffer.

The above-described embodiments are, of course, merely illustrative of the principles of the invention. Indeed, numerous other methods or apparatus may be devised by those skilled in the art without departing from the scope of the invention. Moreover, the invention may be implemented as hardware, as an integrated circuit, via programming on a microprocessor, on a digital signal processor or the like.

## Claims

1. A method for use in a wireless communications system (100) comprising at least one base station (101) and at least two wireless terminals (104) and which communicate via a wireless channel resource comprising the steps of:
partitioning said wireless channel resource into at least an acknowledgment channel including a plurality of acknowledgment segments (201, 304, 305, 402, 404) and a traffic channel including a plurality of traffic segments (202, 203, 301, 302, 401, 403), said plurality of acknowledgment segments having a first bandwidth and said plurality of traffic segments having a second bandwidth different from the first bandwidth, wherein individual channel segments are dedicated to individual wireless terminals of the at least two wireless terminals;
transmitting (501) traffic data in a first one of said plurality of traffic segments, said first one traffic segment being dedicated to a first wireless terminal of the at least two wireless terminals and the first one traffic segment being used to transport traffic data;
receiving (502) a first acknowledgment in a first one of said acknowledgment segments that corresponds directly to said first one traffic segment;
determining (503) whether said received first acknowledgment indicates that the traffic data is to be retransmitted; and
retransmitting (504) said traffic data when said determination so indicates;
transmitting traffic data in a second one of said plurality of traffic segments, said second traffic segment being dedicated to a second wireless terminal of the at least two wireless terminals;
receiving a second acknowledgement in a second acknowledgment segment corresponding directly to said second one of said plurality of traffic segments;
determining whether said received second acknowledgment indicates that traffic data transmitted in said second one of said plurality of traffic segments is to be retransmitted and retransmitting said traffic data when said determination so indicates.

2. The method as defined in claim 1, wherein said first acknowledgement segment is known prior to performing said receiving step to be dedicated to the first wireless terminal to which said one traffic segment is dedicated, and
wherein retransmitting said traffic data includes transmitting said traffic data for a second time using a third one of said plurality of traffic segments which is also dedicated to said first wireless terminal.

3. The method of claim 2, wherein said acknowledgment includes at least one logical bit of information indicating whether or not said traffic data should be retransmitted.

4. The method as defined in claim 3, further comprising:
receiving a third acknowledgment in a third acknowledgment segment corresponding directly to said third one of said plurality of traffic segments;
wherein retransmitting, to said second wireless terminal, includes transmitting the traffic data transmitted in said second one of said plurality of traffic segments in a fourth traffic segment when said determination so indicates.

5. The method as defined in claim 1, wherein a one to one relationship exists between each acknowledgement segment in said acknowledgement channel and a corresponding traffic segment in said traffic channel.

6. The method as defined in claim 5 wherein each acknowledgment segment has a prescribed transmission delay interval relative to a transmission interval of the corresponding traffic segment.

7. The method as defined in claim 5 wherein said acknowledgment includes at least one logical bit of information indicating whether or not said traffic data should be retransmitted.

8. The method as defined in claim 7 wherein retransmission information in said acknowledgment consists of one logical bit.

9. The method as defined in claim 7 further comprising detecting a logical state of said at least one logical bit of information to determine whether said traffic data should be retransmitted.

10. The method as defined in claim 9 wherein said logical bit of information has a first logical state and a second logical state and one of said logical states indicates that said traffic data has to be retransmitted and the other of said logical states indicates that no retransmission of said traffic data is required.

11. The method as defined in claim 5 wherein said acknowledgment channel is common to all active wireless terminals, the segments of said acknowledgment channel being dedicated to different wireless devices.

12. The method as defined in claim 11 wherein said partitioning of said wireless channel resource into said acknowledgment channel and said traffic channel is in a fixed manner.

13. The method as defined in said 12 wherein each of said traffic segments has a fixed finite time interval and bandwidth.

14. The method as defined in claim 12 wherein each of said acknowledgment segments has a fixed finite time interval and bandwidth.

15. The method as defined in claim 5 further including the steps of receiving (601) traffic data in a traffic segment, determining (602) whether said received traffic data passes a prescribed error test, and in response to results of said error test, transmitting (604) a first type of acknowledgement in the acknowledgment segment associated with the traffic segment that transported said traffic data when said error test has been passed and transmitting (603) a second type of acknowledgment in the acknowledgment segment associated with the traffic segment that transported said traffic data when said error test has been failed.

16. The method as defined in claim 15 wherein in said base station said step of transmitting includes transmitting the traffic segment on a downlink and said step of receiving includes receiving the acknowledgement segment on an uplink.

17. The method as defined in claim 15 wherein said base station receives the traffic segment on an uplink and transmits the acknowledgement segment on a downlink.

18. The method as defined in claim 15 wherein in said at least two wireless terminals said step of receiving includes receiving the traffic segment on a downlink and said step of transmitting includes transmitting the acknowledgement segment on an uplink.

19. The method as defined in claim 15 wherein in said at least two wireless terminals said step of transmitting includes transmitting the traffic segment on an uplink and said step of receiving includes receiving the acknowledgement segment on a downlink.

20. An apparatus for use in a wireless communications system (100) comprising at least one base station (101) and at least two wireless terminals (104) and which communicate via a wireless channel resource comprising:
a partitioner for partitioning said wireless channel resource into at least an acknowledgment channel including a plurality of acknowledgment segments (201, 304, 305,402, 404) and a traffic channel including a plurality of traffic segments (202, 203, 301, 302, 401, 403), said plurality of acknowledgment segments having a first bandwidth and said plurality of traffic segments having a second bandwidth different from the first bandwidth, wherein individual channel segments are dedicated to individual wireless terminals of the at least two wireless terminals;
a transmitter for transmitting traffic data in a first traffic segment of said plurality of traffic segments, said first traffic segment being dedicated to a first wireless terminal of the at least two wireless terminals, and for transmitting traffic data in a second one of said plurality of traffic segments, said second traffic segment being dedicated to a second wireless terminal of the at least two wireless terminals;
a receiver for receiving a first acknowledgment in a first one of said acknowledgment segments that is associated in a prescribed fixed manner with said traffic segment transporting said traffic data, and for receiving a second acknowledgement in a second acknowledgment segment corresponding directly to said second one of said plurality of traffic segments;
a detector for determining whether said received first acknowledgment indicates that the traffic data transmitted in said first traffic segment is to be retransmitted, and for determining whether said received second acknowledgment indicates that the traffic data transmitted in said second traffic segment is to be retransmitted; and
said transmitter being controlled in response to the results of said determination to retransmit said traffic data in said respective traffic segment when said determination so indicates.

21. The apparatus as defined in claim 20 wherein said acknowledgment includes at least one logical bit of information indicating whether or not said traffic data should be retransmitted.

22. The apparatus as defined in claim 20 wherein said traffic data is transmitted in an uplink and said acknowledgment is received in a downlink.

23. The apparatus as defined in claim 20 wherein said traffic data is received in an uplink and said acknowledgment is transmitted in a downlink.

24. The apparatus as defined in claim 20, the partitioner associating each of said acknowledgment segments with said traffic segments in a prescribed manner.

25. The apparatus as defined in claim 24 wherein said association of said acknowledgment segments and said traffic segments includes the acknowledgment segment having a prescribed delay interval relative to an associated traffic interval.

26. The apparatus as defined in claim 24 wherein said acknowledgement includes at least one logical bit of information indicating whether or not said traffic data should be retransmitted.

27. The apparatus as defined in claim 26 wherein said detector detects a logical state of said at least one logical bit of information to determine whether said traffic data should be retransmitted.

28. The apparatus as defined in claim 27 wherein said logical bit of information has a first logical state and a second logical state and one of said logical states indicates that said traffic data has to be retransmitted and the other of said logical states indicates that no retransmission of said traffic data is required.

29. The apparatus as defined in claim 28 wherein said acknowledgement channel is common to all active wireless terminals.

30. The apparatus as defined in claim 29 wherein the partitioner for partitioning partitions said wireless channel resource into said acknowledgment channel and said traffic channel in a fixed manner.

31. The apparatus as defined in claim 30 wherein each of said traffic segments has a prescribed finite time interval and bandwidth.

32. The apparatus as defined in claim 31 wherein each of said acknowledgment segments has a prescribed finite time interval and bandwidth.

33. The apparatus as defined in claim 24 further including a second receiver for receiving traffic data in a traffic segment, a second detector for determining whether said received traffic data passes a prescribed error test, and a second transmitter responsive to results of said error test for transmitting a first prescribed acknowledgment in the acknowledgment segment associated with the traffic segment that transported said traffic data when said error test has been passed and for transmitting a second prescribed acknowledgment in the acknowledgment segment associated with the traffic segment that transported said traffic data when said error test has been failed.

34. The apparatus as defined in claim 33 wherein said base station transmits the traffic segment on a downlink and receives the acknowledgment segment on an uplink.

35. The apparatus as defined in claim 34 wherein said base station receives the traffic segment on an uplink and transmits the acknowledgment segment on a downlink.

36. The apparatus as defined in claim 33 wherein in said at least two wireless terminals said second receiver receives the traffic segment on a downlink and said second transmitter transmits the acknowledgment segment on an uplink.

37. The apparatus as defined in claim 33 wherein in said at least two wireless terminals said second transmitter transmits the traffic segment on an uplink and said second receiver receives the acknowledgment segment on a downlink.

## Patentansprüche

1. Ein Verfahren zur Verwendung in einem Drahtloskommunikationssystem (100), das wenigstens eine Basisstation (101) und wenigstens zwei Drahtlosendgeräte (104) aufweist und welche über eine Drahtloskanalressource kommunizieren, das die folgenden Schritte aufweist:
Partitionieren der Drahtloskanalressource in wenigstens einen Bestätigungskanal, der eine Vielzahl von Bestätigungssegmenten (201, 304, 305, 402, 404) aufweist, und einen Verkehrskanal, der eine Vielzahl von Verkehrssegmenten (202, 203, 301, 302, 401, 403) aufweist, wobei die Vielzahl von Bestätigungssegmenten eine erste Bandbreite hat und die Vielzahl von Verkehrssegmenten eine zweite Bandbreite hat, die sich von der ersten Bandbreite unterscheidet, wobei individuelle Kanalsegmente individuellen Drahtlosendgeräten der wenigstens zwei Drahtlosendgeräte zugeordnet sind;
Senden (501) von Verkehrsdaten in einem ersten der Vielzahl von Verkehrssegmenten, wobei das erste Verkehrssegment einem ersten Drahtlosendgerät der wenigstens zwei Drahtlosendgeräte zugeordnet ist und das erste Verkehrssegment zum Transportieren von Verkehrsdaten verwendet wird;
Empfangen (502) einer ersten Bestätigung in einem ersten der Bestätigungssegmente, das direkt dem ersten Verkehrssegment entspricht;
Bestimmen (503), ob die empfangene erste Bestätigung anzeigt, dass die Verkehrsdaten erneut gesendet werden sollen; und
erneutes Senden (504) der Verkehrsdaten, wenn die Bestimmung dies anzeigt;
Senden von Verkehrsdaten in einem zweiten der Vielzahl von Verkehrssegmenten, wobei das zweite Verkehrssegment einem zweiten Drahtlosendgerät der wenigstens zwei Drahtlosendgeräte zugeordnet ist;
Empfangen einer zweiten Bestätigung in einem zweiten Bestätigungssegment, das direkt dem zweiten der Vielzahl von Verkehrssegmenten entspricht;
Bestimmen, ob die empfangene zweite Bestätigung anzeigt, dass Verkehrsdaten, die in dem zweiten der Vielzahl von Verkehrssegmenten gesendet worden sind, erneut gesendet werden sollen und erneutes Senden der Verkehrsdaten, wenn die Bestimmung dies anzeigt.

2. Verfahren nach Anspruch 1, wobei bezüglich des ersten Bestätigungssegments vor dem Durchführen des Empfangsschrittes bekannt ist, dass es dem ersten Drahtlosendgerät zugeordnet ist, dem das erste Verkehrssegment zugeordnet ist, und
wobei das erneute Senden von Verkehrsdaten Senden der Verkehrsdaten zum zweiten Mal unter Verwendung eines dritten der Vielzahl von Verkehrssegmenten aufweist, welches auch dem ersten Drahtlosendgerät zugeordnet ist.

3. Verfahren nach Anspruch 2, wobei die Bestätigung wenigstens ein logisches Bit an Information aufweist, das anzeigt, ob die Verkehrsdaten erneut gesendet werden sollten oder nicht.

4. Verfahren nach Anspruch 3, das weiter Folgendes aufweist:
Empfangen einer dritten Bestätigung in einem dritten Bestätigungssegment, das direkt dem dritten der Vielzahl von Verkehrssegmenten entspricht;
wobei das erneute Senden, an das zweite Drahtlosendgerät, Senden der Verkehrsdaten aufweist, die in dem zweiten der Vielzahl von Verkehrssegmenten gesendet worden sind, und zwar in einem vierten Verkehrssegment, wenn die Bestimmung dies anzeigt.

5. Verfahren nach Anspruch 1, wobei eine Eins-zu-Eins-Beziehung zwischen jedem Bestätigungssegment in dem Bestätigungskanal und einem entsprechenden Verkehrssegment in dem Verkehrskanal existiert.

6. Verfahren nach Anspruch 5, wobei jedes Bestätigungssegment ein vorgeschriebenes Sendeverzögerungsintervall relativ zu einem Sendeintervall des entsprechenden Verkehrssegments hat.

7. Verfahren nach Anspruch 5, wobei die Bestätigung wenigstens ein logisches Bit an Information aufweist, das anzeigt, ob die Verkehrsdaten erneut gesendet werden sollten oder nicht.

8. Verfahren nach Anspruch 7, wobei die Information bezüglich der erneuten Sendung in der Bestätigung aus einem logischen Bit besteht.

9. Verfahren nach Anspruch 7, das weiter Detektieren eines logischen Zustandes des wenigstens einen logischen Bits an Information aufweist um zu bestimmen, ob die Verkehrsdaten erneut gesendet werden sollten.

10. Verfahren nach Anspruch 9, wobei das logische Bit an Information einen ersten logischen Zustand und einen zweiten logischen Zustand hat und einer der logischen Zustände anzeigt, dass die Verkehrsdaten erneut gesendet werden müssen und der andere der logischen Zustände anzeigt, dass keine erneute Sendung der Verkehrsdaten erforderlich ist.

11. Verfahren nach Anspruch 5, wobei der Bestätigungskanal für alle aktiven Drahtlosendgeräte gemeinsam vorliegt, wobei die Segmente des Bestätigungskanals unterschiedlichen Drahtloseinrichtungen zugeordnet sind.

12. Verfahren nach Anspruch 11, wobei das Partitionieren der Drahtloskanalressource in dem Bestätigungskanal und dem Verkehrskanal auf eine festgelegte Weise ist.

13. Verfahren nach Anspruch 12, wobei jedes der Verkehrssegmente ein fixes endliches Zeitintervall und eine fixe endliche Bandbreite hat.

14. Verfahren nach Anspruch 12, wobei jedes der Bestätigungssegmente ein fixes endliches Zeitintervall und eine fixe endliche Bandbreite hat.

15. Verfahren nach Anspruch 5, das weiter die folgenden Schritte aufweist: Empfangen (601) von Verkehrsdaten in einem Verkehrssegment, Bestimmen (602), ob die empfangenen Verkehrsdaten einen vorgeschriebenen Fehlertest bestehen, und ansprechend auf Ergebnisse des Fehlertests, Senden (604) eines ersten Typs einer Bestätigung in dem Bestätigungssegment, das mit dem Verkehrssegment assoziiert ist, das die Verkehrsdaten transportiert hat, wenn der Fehlertest bestanden wurde, und Senden (603) eines zweiten Typs einer Bestätigung in dem Bestätigungssegment, das mit dem Verkehrssegment assoziiert ist, das die Verkehrsdaten transportiert hat, wenn der Fehlertest fehlgeschlagen ist.

16. Verfahren nach Anspruch 15, wobei in der Basisstation der Schritt des Sendens Senden des Verkehrssegments auf einem Downlink bzw. einer Abwärtsstrecke aufweist und der Schritt des Empfangens Empfangen des Bestätigungssegments auf einem Uplink bzw. einer Aufwärtsstrecke aufweist.

17. Verfahren nach Anspruch 15, wobei die Basisstation das Verkehrssegment auf einer Aufwärtsstrecke empfängt und das Bestätigungssegment auf einer Abwärtsstrecke sendet.

18. Verfahren nach Anspruch 15, wobei in den wenigstens zwei Drahtlosendgeräten der Schritt des Empfangens Empfangen des Verkehrssegments auf einer Abwärtsstrecke aufweist und der Schritt des Sendens Senden des Bestätigungssegments auf einer Aufwärtsstrecke aufweist.

19. Verfahren nach Anspruch 15, wobei in den wenigstens zwei Drahtlosendgeräten der Schritt des Sendens Senden des Verkehrssegments auf einer Aufwärtsstrecke aufweist und der Schritt des Empfangens Empfangen des Bestätigungssegments auf einer Abwärtsstrecke aufweist.

20. Eine Vorrichtung zur Verwendung in einem Drahtloskommunikationssystem (100), das wenigstens eine Basisstation (101) und wenigstens zwei Drahtlosendgeräte (104) aufweist und welche über eine Drahtloskanalressource kommunizieren, die Folgendes aufweist:
ein Partitionierungselement zum Partitionieren der Drahtloskanalressource in wenigstens einen Bestätigungskanal, der eine Vielzahl von Bestätigungssegmenten (201, 304, 305, 402, 404) aufweist, und einen Verkehrskanal, der eine Vielzahl von Verkehrssegmenten (202, 203, 301, 302, 401, 403) aufweist, wobei die Vielzahl von Bestätigungssegmenten eine erste Bandbreite hat und die Vielzahl von Verkehrssegmenten eine zweite Bandbreite hat, die sich von der ersten Bandbreite unterscheidet, wobei individuelle Kanalsegmente individuellen Drahtlosendgeräten der wenigstens zwei Drahtlosendgeräte zugeordnet sind;
einen Sender zum Senden von Verkehrsdaten in einem ersten Verkehrssegment der Vielzahl von Verkehrssegmenten, wobei das erste Verkehrssegment einem ersten Drahtlosendgerät der wenigstens zwei Drahtlosendgeräte zugeordnet ist, und zum Senden von Verkehrsdaten in einem zweiten der Vielzahl von Verkehrssegmente, wobei das zweite Verkehrssegment einem zweiten Drahtlosendgerät der wenigstens zwei Drahtlosendgeräte zugeordnet ist;
einen Empfänger zum Empfangen einer ersten Bestätigung in einem ersten der Bestätigungssegmente, das auf vorgeschriebene festgelegte Weise mit dem Verkehrssegment, das die Verkehrsdaten transportiert, assoziiert ist und zum Empfangen einer zweiten Bestätigung in einem zweiten Bestätigungssegment, das auf direkte Weise dem zweiten der Vielzahl von Verkehrssegmente entspricht;
ein Detektionselement zum Bestimmen, ob die empfangene erste Bestätigung anzeigt, dass die Verkehrsdaten, die in dem ersten Verkehrssegment gesendet worden sind, erneut gesendet werden sollen, und zum Bestimmen, ob die empfangene zweite Bestätigung anzeigt, dass die Verkehrsdaten, die in zweiten Verkehrssegment gesendet worden sind, erneut gesendet werden sollen; und
der Sender gesteuert wird ansprechend auf die Ergebnisse der Bestimmung zum erneuten Senden der Verkehrsdaten in dem entsprechenden Verkehrssegment, wenn die Bestimmung dies anzeigt.

21. Vorrichtung nach Anspruch 20, wobei die Bestätigung wenigstens ein logisches Bit an Information aufweist, das anzeigt, ob die Verkehrsdaten erneut gesendet werden sollten oder nicht.

22. Vorrichtung nach Anspruch 20, wobei die Verkehrsdaten in einer Aufwärtsstrecke gesendet werden und die Bestätigung in einer Abwärtsstrecke empfangen wird.

23. Vorrichtung nach Anspruch 20, wobei die Verkehrsdaten in einer Aufwärtsstrecke empfangen werden und die Bestätigung in einer Abwärtsstrecke gesendet wird.

24. Vorrichtung nach Anspruch 20, wobei das Partitionierungselement jedes der Bestätigungssegmente mit den Verkehrssegmenten auf eine vorgeschriebene Weise assoziiert.

25. Vorrichtung nach Anspruch 24, wobei die Assoziation der Bestätigungssegmente und der Verkehrssegmente beinhaltet, dass das Bestätigungssegment ein vorgeschriebenes Verzögerungsintervall relativ zu einem assoziierten Verkehrsintervall hat.

26. Vorrichtung nach Anspruch 24, wobei die Bestätigung wenigstens ein logisches Bit an Information aufweist, das anzeigt, ob die Verkehrsdaten erneut gesendet werden sollten oder nicht.

27. Vorrichtung nach Anspruch 26, wobei das Detektionselement einen logischen Zustand des wenigstens einen logischen Bits an Information detektiert zum Bestimmen, ob die Verkehrsdaten erneut gesendet werden sollten.

28. Vorrichtung nach Anspruch 27, wobei das logische Bit an Information einen ersten logischen Zustand und einen zweiten logischen Zustand hat und einer der logischen Zustände anzeigt, dass die Verkehrsdaten erneut gesendet werden sollten und der andere der logischen Zustände anzeigt, dass keine erneute Sendung der Verkehrsdaten erforderlich ist.

29. Vorrichtung nach Anspruch 28, wobei der Bestätigungskanal für alle aktiven Drahtlosendgeräte gemeinsam vorliegt.

30. Vorrichtung nach Anspruch 29, wobei das Partitionierungselement zum Partitionieren die Drahtloskanalressource in den Bestätigungskanal und den Verkehrskanal auf eine festgelegte Weise partitioniert.

31. Vorrichtung nach Anspruch 30, wobei jedes der Verkehrssegmente ein vorgeschriebenes endliches Zeitintervall und eine vorgeschriebene endliche Bandbreite hat.

32. Vorrichtung nach Anspruch 31, wobei jedes der Bestätigungssegmente ein vorgeschriebenes endliches Zeitintervall und eine vorgeschriebene endliche Bandbreite hat.

33. Vorrichtung nach Anspruch 24, die weiter einen zweiten Empfänger zum Empfangen von Verkehrsdaten in einem Verkehrssegment, einen zweiten Detektor zum Bestimmen, ob die empfangenen Verkehrsdaten einen vorgeschriebenen Fehlertest bestehen, und einen zweiten Sender aufweist, der auf Ergebnisse des Fehlertests anspricht, zum Senden einer ersten vorgeschriebenen Bestätigung in dem Bestätigungssegment, das mit dem Verkehrssegment assoziiert ist, das die Verkehrsdaten transportiert hat, wenn der Fehlertest bestanden worden ist, und zum Senden einer zweiten vorgeschriebenen Bestätigung in dem Bestätigungssegment, das mit dem Verkehrssegment assoziiert ist, das die Verkehrsdaten transportiert hat, wenn der Fehlertest fehlgeschlagen ist.

34. Vorrichtung nach Anspruch 33, wobei die Basisstation das Verkehrssegment auf einem Downlink bzw. einer Abwärtsstrecke sendet und das Bestätigungssegment auf einem Uplink bzw. einer Aufwärtsstrecke empfängt.

35. Vorrichtung nach Anspruch 34, wobei die Basisstation das Verkehrssegment auf einer Aufwärtsstrecke empfängt und das Bestätigungssegment auf einer Abwärtsstrecke sendet.

36. Vorrichtung nach Anspruch 33, wobei in den wenigstens zwei Drahtlosendgeräten der zweite Empfänger das Verkehrssegment auf einer Abwärtsstrecke empfängt und der zweite Sender das Bestätigungssegment auf einer Aufwärtsstrecke sendet.

37. Vorrichtung nach Anspruch 33, wobei in den wenigstens zwei Drahtlosendgeräten der zweite Empfänger das Verkehrssegment auf einer Aufwärtsstrecke sendet und der zweite Empfänger das Bestätigungssegment auf einer Abwärtsstrecke empfängt.

## Revendications

1. Procédé destiné à être utilisé dans un système de communication sans fil (100) comprenant au moins une station de base (101) et au moins deux terminaux sans fil (104) et qui communiquent via une ressource de canal sans fil, comprenant les étapes suivantes :
le partitionnement de ladite ressource de canal sans fil en au moins un canal d'accusé de réception comportant une pluralité de segments d'accusé de réception (201, 304, 305, 402, 404) et un canal de trafic comportant une pluralité de segments de trafic (202, 203, 301, 302, 401, 403), ladite pluralité de segments d'accusé de réception ayant une première bande passante et ladite pluralité de segments de trafic ayant une deuxième bande passante différente de la première bande passante, dans lequel des segments de canaux individuels sont dédiés à des terminaux sans fil individuels parmi lesdits au moins deux terminaux sans fil ;
l'émission (501) de données de trafic dans un premier segments parmi ladite pluralité de segment de trafic, ledit premier segment de trafic étant dédié à un premier terminal sans fil parmi lesdits au moins deux terminaux sans fil et ledit premier segment de trafic étant utilisé pour transporter des données de trafic ;
la réception (502) d'un premier accusé de réception dans un premier segment parmi les segments d'accusé de réception qui correspond directement audit premier segment de trafic ;
la détermination (503) de si ledit accusé de réception reçu indique que les données de trafic doivent être réémises ; et
la réémission (504) desdites données de trafic quand ladite détermination l'indique ;
l'émission de données de trafic dans un deuxième segment parmi ladite pluralité de segments de trafic, ledit deuxième segment de trafic étant dédié à un deuxième terminal sans fil parmi lesdits au moins deux terminaux sans fil ;
la réception d'un deuxième accusé de réception dans un deuxième segment d'accusé de réception correspondant directement audit deuxième parmi la pluralité de segments de trafic ;
la détermination de si ledit deuxième accusé de réception reçu indique quelles données de trafic émises dans ledit deuxième segment parmi ladite pluralité de segments de trafic doivent être réémises et la réémission desdites données de trafic quand ladite détermination l'indique.

2. Procédé selon la revendication 1, dans lequel ledit premier segment d'accusé de réception est connu avant d'exécuter ladite étape de réception pour être dédié au premier terminal sans fil auquel est dédié ledit segment de trafic, et
dans lequel la réémission desdites données de trafic comporte l'émission desdites données de trafic pour une deuxième fois en utilisant un troisième segment parmi ladite pluralité de segments de trafic qui est également dédié audit premier terminal sans fil.

3. Procédé selon la revendication 2, dans lequel ledit accusé de réception comporte au moins un bit logique d'information indiquant si lesdites données de trafic doivent être réémises ou non.

4. Procédé selon la revendication 3, comprenant en outre :
la réception d'un troisième accusé de réception dans un troisième segment d'accusé de réception correspondant directement audit troisième segment parmi ladite pluralité de segments de trafic ;
dans lequel la réémission, à destination dudit deuxième terminal sans fil, comporte l'émission des données de trafic émises dans ledit deuxième segment de ladite pluralité de segments de trafic dans un quatrième segment de trafic quand ladite détermination l'indique.

5. Procédé selon la revendication 1, dans lequel une relation un à un existe entre chaque segment d'accusé de réception dans ledit canal d'accusé de réception et un segment de trafic correspondant dans ledit canal de trafic.

6. Procédé selon la revendication 5, dans lequel chaque segment d'accusé de réception a un intervalle de temps d'émission prescrit par rapport à un intervalle d'émission du segment de trafic correspondant.

7. Procédé selon la revendication 5, dans lequel chaque accusé de réception comporte au moins un bit logique d'information indiquant si lesdites données de trafic doivent être réémises ou non.

8. Procédé selon la revendication 7, dans lequel des informations de réémission dans ledit accusé de réception consistent en un bit logique.

9. Procédé selon la revendication 7, comprenant en outre la détection d'un état logique dudit au moins un bit logique d'information pour déterminer si lesdites données de trafic doivent être réémises.

10. Procédé selon la revendication 9, dans lequel ledit bit logique d'information a un premier état logique et un deuxième état logique et un desdits états logiques indique que lesdites données de trafic doivent être réémises et l'autre desdits états logiques indique qu'aucune réémission des données de trafic n'est requise.

11. Procédé selon la revendication 5, dans lequel chaque canal d'accusé de réception est commun à tous les terminaux sans fil actifs, les segments dudit canal d'accusé de réception étant dédiés à des dispositifs sans fil différents.

12. Procédé selon la revendication 11, dans lequel ledit partitionnement de ladite ressource de canal sans fil en ledit canal d'accusé de réception et ledit canal de trafic est effectué de façon fixe.

13. Procédé selon la revendication 12, dans lequel chacun desdits segments de trafic a une bande passante et un intervalle de temps fini fixes.

14. Procédé selon la revendication 12, dans lequel chacun desdits segments d'accusé de réception a un intervalle de temps fini et une bande passante fixes.

15. Procédé selon la revendication 5, comprenant en outre les étapes de réception (601) des données de trafic dans un segment de trafic, de détermination (602) de si lesdites données de trafic reçues réussissent un test d'erreur prescrit, et, en réponse aux résultats dudit test d'erreur, d'émission (604) d'un premier type d'accusé de réception dans le segment d'accusé de réception associé au segment de trafic qui a transporté lesdites données de trafic quand ledit test d'erreur a été réussi et d'émission (603) d'un deuxième type d'accusé de réception dans le segment d'accusé de réception associé au segment de trafic qui a transporté lesdites données de trafic quand ledit test d'erreur a échoué.

16. Procédé selon la revendication 15, dans lequel dans ladite station de base ladite étape d'émission comporte l'émission du segment de trafic sur une liaison descendante et ladite étape de réception comporte la réception du segment d'accusé de réception sur une liaison montante.

17. Procédé selon la revendication 15, dans lequel ladite station de base reçoit le segment de trafic sur une liaison montante et émet le segment d'accusé de réception sur une liaison descendante.

18. Procédé selon la revendication 15, dans lequel, dans lesdits au moins deux terminaux sans fil, ladite étape de réception comporte la réception du segment de trafic sur une liaison descendante et ladite étape d'émission comporte l'émission du segment d'accusé de réception sur une liaison montante.

19. Procédé selon la revendication 15, dans lequel, dans lesdits au moins deux terminaux sans fil, ladite étape d'émission comporte l'émission du segment de trafic sur une liaison montante et ladite étape de réception comporte la réception du segment d'accusé de réception sur une liaison descendante.

20. Appareil destiné à être utilisé dans un système de communication sans fil (100) comprenant au moins une station de base (101) et au moins deux terminaux sans fil (104) et qui communiquent via une ressource de canal sans fil, comprenant :
un dispositif de partitionnement pour effectuer un partitionnement de ladite ressource de canal sans fil en au moins un canal d'accusé de réception comportant une pluralité de segments d'accusé de réception (201, 304, 305, 402, 404) et un canal de trafic comportant une pluralité de segments de trafic (202, 203, 301, 302, 401, 403), ladite pluralité de segments d'accusé de réception ayant une première bande passante et ladite pluralité de segments de trafic ayant une deuxième bande passante différente de la première bande passante, dans lequel des segments de canaux individuels sont dédiés à des terminaux sans fil individuels parmi lesdits au moins deux terminaux sans fil ;
un émetteur pour émettre des données de trafic dans un premier segment de trafic parmi ladite pluralité de segments de trafic, ledit premier segment de trafic étant dédié à un premier terminal sans fil parmi lesdits au moins deux terminaux sans fil, et pour émettre des données de trafic dans un deuxième segment parmi ladite pluralité de segments de trafic, ledit deuxième segment de trafic étant dédié à un deuxième terminal sans fil parmi lesdits au moins deux terminaux sans fil ;
un récepteur pour recevoir un premier accusé de réception dans un premier segment parmi les segments d'accusé de réception qui est associé d'une façon fixe prescrite avec ledit segment de trafic transportant lesdites données de trafic, et pour recevoir un deuxième accusé de réception dans un deuxième segment d'accusé de réception correspondant directement audit deuxième segment parmi la pluralité de segments de trafic ;
un détecteur pour déterminer si ledit accusé de réception reçu indique que les données de trafic émises dans ledit premier segment de trafic doivent être réémises, et pour déterminer si ledit accusé de réception reçu indique que les données de trafic émises dans ledit deuxième segment de trafic doivent être réémises ; et
ledit émetteur étant commandé en réponse aux résultats de ladite détermination pour réémettre lesdites données de trafic dans le segment de trafic respectif quand ladite détermination l'indique.

21. Appareil selon la revendication 20, dans lequel ledit accusé de réception comporte au moins un bit logique d'information indiquant si lesdites données de trafic doivent être réémises ou non.

22. Appareil selon la revendication 20, dans lequel lesdites données de trafic sont émises dans une liaison montante et ledit accusé de réception est reçu dans une liaison descendante.

23. Appareil selon la revendication 20, dans lequel lesdites données de trafic sont reçues dans une liaison montante et ledit accusé de réception est émis dans une liaison descendante.

24. Appareil selon la revendication 20, dans lequel ledit dispositif de partitionnement associe chacun desdits segments d'accusé de réception auxdits segments de trafic d'une façon prescrite.

25. Appareil selon la revendication 24, dans lequel ladite association desdits segments d'accusé de réception et desdits segments de trafic comporte le segment d'accusé de réception ayant un intervalle de temps fini prescrit par rapport à un intervalle de trafic associé.

26. Appareil selon la revendication 24, dans lequel chaque accusé de réception comporte au moins un bit logique d'information indiquant si lesdites données de trafic doivent être réémises ou non.

27. Appareil selon la revendication 26, dans lequel le détecteur détecte un état logique dudit au moins un bit logique d'information pour déterminer si lesdites données de trafic doivent être réémises.

28. Appareil selon la revendication 27, dans lequel ledit bit logique d'information a un premier état logique et un deuxième état logique et un desdits états logiques indique que lesdites données de trafic doivent être réémises et que l'autre desdits états logiques indique qu'aucune réémission des données de trafic n'est requise.

29. Appareil selon la revendication 28, dans lequel ledit canal d'accusé de réception est commun à tous les terminaux sans fil actifs.

30. Appareil selon la revendication 29, dans lequel le dispositif de partitionnement pour effectuer un partitionnement partitionne ladite ressource de canal sans fil en ledit canal d'accusé de réception et ledit canal de trafic de façon fixe.

31. Appareil selon la revendication 30, dans lequel chacun desdits segments de trafic a une bande passante et un intervalle de temps prescrit fini fixes.

32. Appareil selon la revendication 31, dans lequel chacun desdits segments d'accusé de réception a une bande passante et un intervalle de temps prescrit fini fixes.

33. Appareil selon la revendication 24, comportant en outre un deuxième récepteur pour recevoir des données de trafic dans un segment de trafic, un deuxième détecteur pour déterminer si lesdites données de trafic reçues réussissent un test d'erreur prescrit, et un deuxième émetteur qui, en réponse aux résultats dudit test d'erreur, émet un premier accusé de réception prescrit dans le segment d'accusé de réception associé au segment de trafic qui a transporté lesdites données de trafic quand ledit test d'erreur a été réussi, et émet un deuxième type d'accusé de réception prescrit dans le segment d'accusé de réception associé au segment de trafic qui a transporté lesdites données de trafic quand ledit test d'erreur a échoué.

34. Appareil selon la revendication 33, dans lequel ladite station de base émet le segment de trafic sur une liaison descendante et reçoit le segment d'accusé de réception sur une liaison montante.

35. Appareil selon la revendication 34, dans lequel ladite station de base reçoit le segment de trafic sur une liaison montante et émet le segment d'accusé de réception sur une liaison descendante.

36. Appareil selon la revendication 33, dans lequel, dans lesdits au moins deux terminaux sans fil, ledit deuxième récepteur reçoit le segment de trafic sur une liaison descendante et ledit deuxième émetteur émet le segment d'accusé de réception sur une liaison montante.

37. Appareil selon la revendication 33, dans lequel, dans lesdits au moins deux terminaux sans fil, ledit deuxième émetteur émet le segment de trafic sur une liaison montante et ledit deuxième récepteur reçoit le segment d'accusé de réception sur une liaison descendante.
